# EUROPEAN PATENT APPLICATION

(11) **EP 3 258 575 A1**
(43) Date of publication of application: **20.12.2017**
(21) Application number: 16767789.7
(22) Date of filing: 16.02.2016
(51) Int. Cl.: H02K 3/32, H02K 17/42, H02P 1/26

(54) **GENERATOR OF ELECTRICAL CURRENT BY MOVEMENT AND INDUCTION BY MEANS OF PERMANENT MAGNETS AND RESONANT COILS**

(30) Priority: 26.03.2015 ES 201530398
(71) Applicant: Energy Resonance Magnetic, S.L., 14011 Córdoba (ES)
(72) Inventor: MORENO MAGDALENO, Ana Maria, 14011 Cordoba (ES)
(74) Representative: Bartrina Diaz, José María
(86) International application number: PCT/ES2016/070089
(87) International publication number: WO 2016/151160

(57) **Abstract**

The invention relates to a generator of electrical current by movement and induction by means of permanent magnets and resonant coils according to an envelope housing a circular solid element in the form of a rotor in which a variable magnetic flux is generated by incorporating thirty-eight permanent and rectangular magnets arranged such that they are radially aligned on the outer periphery of said rotor, and rotating inside a stator which has an annular shape and is hollow so as to carry out the cooling on the inside thereof, containing seventy-six idle coils which are regularly distributed and between which resonant capacitors and coils are alternated with non-resonant coils, arranged specifically three millimetres from the magnets, from which electrical current is generated with a very high efficiency.

## Description

### Object of the invention

This invention is a machine that generates electrical energy using permanent magnets and coils that resonate with a geometric configuration and relative motion, based on which it is possible to achieve very low levels of torque; that is, highly-efficient energy generation.

The scope of application of this invention is in the field of electricity generation industry and the mechanical industry.

### Background to the state of the art

It is well known that there are currently several types of electromagnetic generators which generate electricity from the rotation of magnets in different configurations inside a set of coils, called the stator, to create a variable magnetic field.

These systems have certain problems which limit their performance. For this reason, the use of these types of applications for generating electricity has not become widespread.

The first problem is that the coil stator is made up of a ferromagnetic core with an laminated ferromagnetic core that can take many different forms and combinations, incorporating copper coils around rotor magnets radially or axially, with a minimum distance from the rotor to allow for the maximum transfer of magnetic flux to the stator. These configurations are limited because they generate a high level of magnetic traction between the magnets and the laminated iron core of the stator, with the resulting increase of the traction or torque needed to start moving the rotor.

One possible solution to this problem is presented in Patent no. EP1147595, called "PERMANENT MAGNET ELECTRIC MACHINE WITH ENERGY SAVING CONTROL", which divides the stator into different sections and places the magnets strategically, to achieve a balance of ferromagnetic forces, which cancels out the permanent magnetic resistance when passing from one magnet to the next.

Nevertheless, this invention solves the above issue in a much more drastic and efficient way, by completely eliminating the ferromagnetic material of the stator, such that its coils have a so-called "air nucleus". Thus, the described system is a way to reduce the magnetic torque resistance to zero, thus reducing the weight and volume of the machine and the cost of manufacture.

In terms of the inconveniences of the proposal, by eliminating the ferromagnetic material from the stator, we reduce the generating capacity of the coils. For this reason, we have designed a system of coils in magnetic resonance through banks of condensers connected to said coils.

Regarding the state of the art in applications of coil systems in magnetic resonance arrangement, Patent US 4064442, called "ELECTRIC MOTOR HAVING PERMANENT MAGNETS AND RESONANT CIRCUIT" proposes a resonant system of coild and condensers to increase the performance of an electric motor. Similarly, Patent US 7940534 B2, called "RESONANT TRANSFORMER SYSTEMS AND METHODS OF USE" uses the resonance of a coil-condenser circuit to improve the performance of a toroidal transformer.

In addition, resonant circuits are especially useful when making tuners, where a lot of power is needed in a specific frequency or in a small range of frequencies within a spectrum. For example, when we tune in to a radio broadcast, what happens in our receptor is a condition of resonance with the central frequency assigned to said radio station. Commercial radio receivers have an "adjustable" resonant circuit for selecting a suitable frequency.

The second problem arises when considering that when the magnets of the rotor move, the force lines of the generated field cut the coils of the stator, producing an electromotive force (emf) in the coils. According to Lenz's law, the electromotive force tends to oppose its source; that is, in our case, the force tries to stop the magnet rotor. The problem we have described is made worse when we increase the generator load. Increasing the load also increases the current circulating through the stator coils, with the ensuing increase in the generated electromotive force, which brakes the rotor even further.

Regarding inventions in the state of the art to avoid or mitigate the problem, Patent no. ES 2264648 A1, called "ELECTRICAL ENERGY GENERATOR", proposes that both the rotor magnets and the stator coils be fixed in place and in front of each other, with a metal shutter disc turning to produce the variation in the magnetic flux needed to generate electricity. With this system, we eliminate the electromotive force that brakes the rotation of the rotor, but the problem it has is that, compared to the systems described above, its performance is much lower. As such, much larger and heavier machines are required, with all the associated inconveniences of cost and utility that that entails.

In conclusion, "Electrical current generator based on the movement and induction of permanent magnets and resonant coils" contributes a machine to the state of the art with the following advantages:
A. The rotor braking effect is avoided according to the magnetic flux of the magnet rotor and stator coils based on a concentric and specific configuration of coils and magnets.
B. Configuration of resonant coils to avoid the transmission of any kind of traction or braking force on the variable magnetic source that creates or induces the force in relation to the resonance in question.

### EXPLANATION OF THE INVENTION

To explain the "Electrical current generator based on the movement and induction of permanent magnets and resonant coils", a case is made with a solid circular object including permanent magnets; it has rotational movement in the form of a rotor, which is subjected to a variable magnetic flux and rotates inside a system of standing coils arranged specifically like a stator, where the variable magnetic flux is transformed into electrical current.

The rotor is made up of a circular piece of aluminium that rotates around a steel axis, fixed at both ends by ball bearings that allow it to run freely and without friction in the coil system known as the stator. 38 rectangular magnets arranged radially are distributed evenly over the external perimeter of the rotor. The magnets are arranged such that the north pole of each magnet turns clockwise, and vice versa, to generate a circular, clockwise flux along the perimeter of the rotor, which barely extends beyond the upper edge of the perimeter of the magnets.

On the other hand, the stator is made up of an oval, ring-shaped copper part with an interior diameter designed to hold the magnet rotor. This copper piece shall be hollow and have input and output connectors to allow cooling liquid to circulate inside it. This will keep the temperature of the coils under 35C. The reason for the cooling is that, because of the resonance of the even circuit coils described below, heating is produced by induction, increasing the electrical resistance of the copper. The copper heating up would reduce the production of energy in the coils, thus affecting the efficiency of the generator. Thus, the 76 coils that make up the stator are wound along the perimeter of the copper part, so that the entire surface of the ring is covered by the coils. This purpose of this arrangement of coils is to generate a toroidal flux inside said coils. This produces feedback between them, producing a considerable increase in the induced flux, which, as a result, increases the amount of generated electricity.

It is important to note that the space that needs to remain between the coils and magnet rotor is three millimetres; if the space were larger the generator would not work, because the flux generated by the magnets would not reach the coils; and if the space is smaller, the flux of the magnets would penetrate the inside of the coils and produce a braking effect, because the rotation direction of the flux generated in the coils is opposite to the variable flux generated by the rotation of the magnets.

Continuing with the definition of the stator, the coils it contains can be divided into two groups: odd and even. Thus, each coil of the even group resonates with a bank of condensers in order to create an LC circuit tuned to the variation frequency of the magnetic flux generated in the magnet rotor when it turns, which is 2,216.66 Hz. This frequency is calculated by dividing the revolutions per minute that the magnet rotor is turning at (3500 RPM) by 60 and multiplying the result by the number of magnetic pole pairs, which in this case is 38, corresponding to the number of magnets, since each magnet has one pair of magnetic poles.

The coils of the odd group are not placed in resonance, since their job is simply to convert into electricity the intense magnetic flux generated by the magnetic resonance of the toroidal circuit of even coils.

To aid understanding of the invention, we could compare the coil stator with a toroidal transformer, in which the primary coil would be the resonant coils of the even circuit, and the secondary coils would be non-resonant coils of the odd circuit. The different lies in the fact that in this case we making use of the high level of electricity generated by the even circuit of resonant coils. This way, the total energy produced by the generator is the sum of the energy produced by the even circuit of resonant coils plus the sum of the energy produced by the odd circuit or circuit of non-resonant coils.

The driver of the magnet rotor may be a wind turbine or a low power electrical motor. Here it is important to note that during start-up, until the rotor accelerates until it reaches 3500 RPM (the resonant frequency of the bank of even coils), the flux produced in the odd coils is 1801 out of phase in relation to the even coils, so they tend to cancel each other out. However, once the optimal speed (and, therefore, the optimal frequency) has been reached, the even coil circuit reaches resonance, generating a level of flux much higher than what is generated in the odd coils due to the effect of the rotor magnets. Thus, the odd coils become slaves of the even circuit and automatically align with the phase of the even circuit.

### DESCRIPTION OF THE DRAWINGS

In order to complement the current description and to facilitate a better understanding of the characteristics of the invention, as well as display the preferred embodiment of the invention, a set of drawings is attached, which are an integral part of this description, for the purposes of illustration only, showing the following:
Figure 1. Main plan view of "Electrical current generator based on the movement and induction of permanent magnets and resonant coils."
Figure 2. Elevation view of the main section of "Electrical current generator based on the movement and induction of permanent magnets and resonant coils."
Figure 3. Main plan view of the rotor with a detailed view of the arrangement of the magnetic poles and the intensity of the magnetic flux they generate.
Figure 4. Main plan view of "Electrical current generator based on the movement and induction of permanent magnets and resonant coils" with a detailed view of the layout and connections of the resonant coils.
Figure 5. Diagram showing the installation of the wind generator based on the invention.

The following constituent elements can be highlighted in the aforementioned figures:
1. Round casing
2. Spacers
3. Stator
4. Coils
5. Input pipette
6. Output pipette
7. Rotor
8. Central rotation axis
9. Neodymium magnets
10. Fixing wedges
11. Hollow, oval-shaped copper ring
12. Intensity of the magnetic flux
13. Resonant coils
14. Condensers
15. Non-resonant coils
16. Driving propeller
17. Generator
18. Centrifugal clutches and transmission group
19. Electric motor
20. Electronic speed control
21. Battery group
22. Charger circuit
23. Rectifiers
24. Pulsing chargers
25. Graphene supercapacitor banks
26. Direct current bus
27. Converters
28. Output bus

### EXAMPLE OF A PREFERRED EMBODIMENT WITH FIGURES

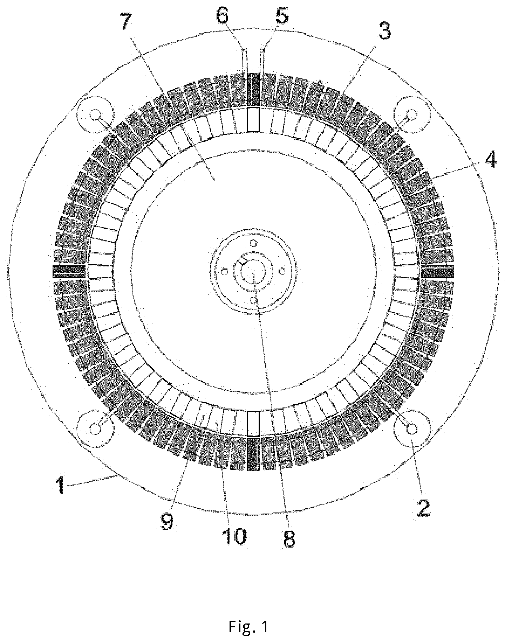

Figure 1 shows an example of the preferred embodiment of the "Electrical current generator based on the movement and induction of permanent magnets and resonant coils" used to produce electricity from a wind generator. It also shows how it can be implemented inside a circular case (1) in the form a chassis, made from aerospace grade aluminium, 10 mm thick with a 400-mm diameter, fitted with four spacers (4) also made from aluminium, to support the stator (3), which holds the group of 76 coils (4) that fill the space of the aforementioned stator (3). Figure 1 also shows the input pipette (5) and the output pipette (6) of the cooling circuit of the coil group (4). Lastly, the configuration of the rotor (7) shows how it turns around a central axis (8) and holds the 40x20x10 mm neodymium magnets (9) with a power of 2500 gauss, as well as the aluminium wedges (10) needed to hold the magnets in place.

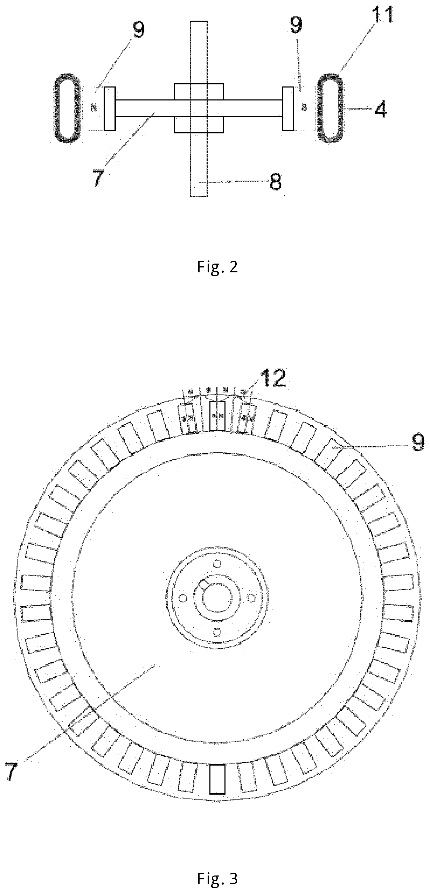

Figure 2 shows an elevation view of the radial section. Here it is possible to see the aluminium rotor group (7), which has a diameter of 230 mm, with the magnet group (9) placed around the perimeter, as well as the location of the 22-mm diameter steel axis (8) which is responsible for the angular movement. It is also possible to see the set of coils (4) wound around the hollow, oval-shaped copper ring (11) allowing cooling liquid to circulate.

Figure 3 displays a main plan view of the rotor (7) to show the distribution of the magnetic poles of the magnets (9) around the perimeter of the rotor. The intensity of the magnetic flux (12) is also represented in the shape of a sinusoidal or variable curve.

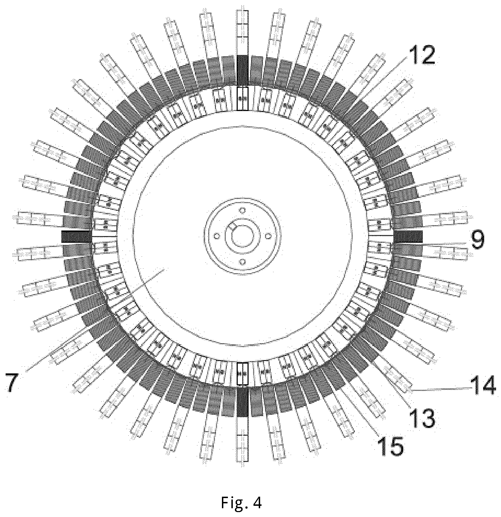

Lastly, figure 4 shows an elevation view with the distribution and connection of the resonant coils of the even group (13) with its banks of condensers (14) and the group of non-resonant coils (15) which are placed in an alternate way or between each of the coils of the even group (13). In the figure, we can also see the rotor group (7) and the representation of the intensity of the magnetic flux of the magnets (12) and how the coils are arranged radially (13 and 15), such that the internal corners of each adjacent coil are aligned.

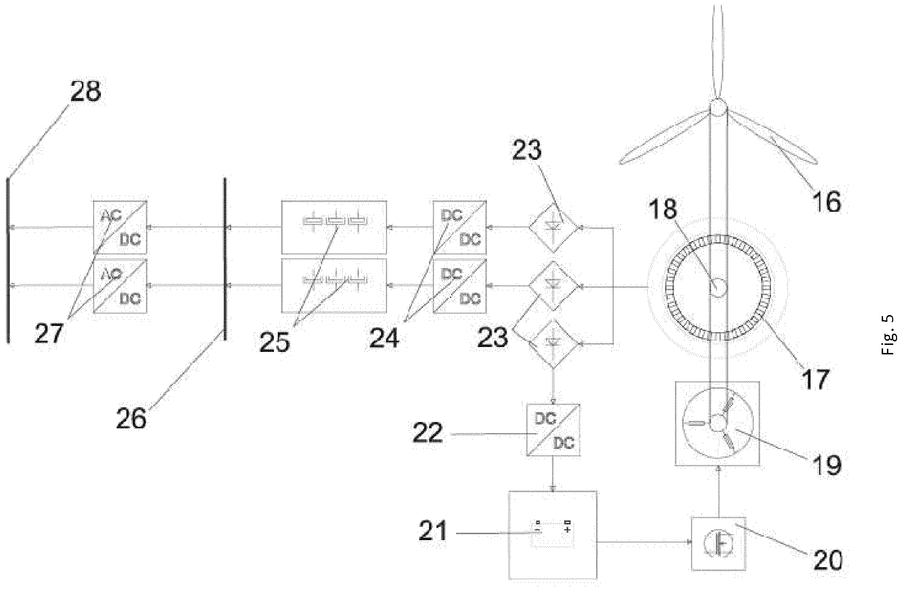

Regarding the connection with the specific application that is the object of this preferred embodiment, figure 5 shows a diagram of the wind generator that benefits from this invention, and which would make it possible to reduce the size of the propeller (16) of the generator group, thanks to the smaller amount of energy needed for operation. Thus, the generator that is the object of this invention (17) is coupled using centrifugal clutches and a transmission set (18) to the drive propeller (16) and a small 3 KW electric motor (19), which would make it possible to operate the generator (17) when there is no wind or when there is very little wind, using the electric motor (19). Said electric motor is supplied by an electronic speed control (20) and a battery set (21) which are kept charged by the charger circuit (22), which is supplied by 25 DC volts delivered by the rectifier group (23), which in turn is supplied with high-frequency alternate current from the group of odd and even coil groups of the proposed invention that is the generator.

The buck converter chargers (24) are each supplying 25V and 200A to banks of graphene supercapacitors (25). Said condensers each have a capacity of 3000 Farads and the corresponding outputs are connected to a direct current bus (26) with a capacity for 25V and 400A, which in turn are connected to inverters (27) with capacity to generate 230Vac and 5KW of power per converter, resulting in a total power level of 10KW in the output bus (28).

As we have seen above, the proposal is for a wind turbine that could generate enough power to supply a home or small farm, and solve the problem of conventional wind turbines that stop generating electricity when there is no wind or very little wind. Lastly, it is worth noting that as the storage capacity of the battery bank (21) increases, the greater the amount f time that the generator can be kept running, making it less dependant on whether there is enough wind or not.

This descriptive report is considered sufficient so that any expert in the matter might understand the scope of the invention and the advantages which could be derived from its use in any application that could require electrical and/or mechanical power.

The connecting elements starting from the generator, which is the object of the invention, to adapt it to a specific application, the materials chosen to make the different described elements, dimensions, implementing technology, diameter of the rotor and no. of magnets and no. of coils and/or connecting elements, etc., may be modified as long as this does not constitute a change of the essence of the invention.

The terms which have been used in this report should be understood broadly and non-exhaustively.

## Claims

1. "Electrical current generator based on the movement and induction of permanent magnets and resonant coils" **characterised by** having an external stator and internal rotor comprising a solid circular shape including permanent magents in which a variable magnetic flux is generated based on the rotation inside the stator. The stator is made up of a system of static coils where resonant coils and condensers are placed between non-resonant coils, arranged specifically three millimetres from he magnets that make up the outer perimeter of the rotor, where the variable magnetic flux is converted into electricity based on the configuration of the following elements:
A. Circular rotor that holds thirty-eight rectangular magnets arranged radially around the outer perimeter of the rotor, such that the north-south axis of the magnet is perpendicular to the radius that passes through it and the north pole of the magnet points clockwise in the direction of rotation, joined to an axis that is held in place at either end by ball bearings that allows for movement inside the stator.
B. Stator in the form of a hollow ring with an internal diameter big enough to hold the magnet rotor; oval-shaped cross-section designed to allow cooling liquid to circulate. The stator will therefore have corresponding input and output ducts for the coolant, designed to ensure that the seventy-six coils that make up the stator are distributed evenly.
C. Configuration of the coils that the stator contains where the resonant coils and condensers are placed between the non-resonant coils, such that each resonant coil is matched with a bank of condensers, creating an LC circuit tuned to 2,216.66 Hz, which is the magnetic flux variation frequency generated in the magnet rotor when it turns.
